# EUROPEAN PATENT SPECIFICATION

(11) **EP 3 723 226 B1**
(45) Date of publication and mention of the grant of the patent: **21.06.2023**
(21) Application number: 20156256.8
(22) Date of filing: 03.06.2009
(51) Int. Cl.: H02J 3/14

(54) **ELECTRICITY CONTROL APPARATUS**
ELEKTRIZITÄTSSTEUERGERÄT
APPAREIL DE COMMANDE D'ÉLECTRICITÉ

(30) Priority: 03.06.2008 GB 0810123
(43) Date of publication of application: 14.10.2020
(62) Divisional of application: 09757768.8
(73) Proprietor: Amberside Technology Ltd, Hemel Hempstead, HP2 4TP (GB)
(72) Inventor: SCAMBLER, Marc, Hemel Hempstead, Hertfordshire HP2 4TP (GB)
(74) Representative: Sadler, Peter Frederick

(56) References cited:
- EP-A- 1 788 688
- WO-A-2004/023624
- WO-A-2004/054065
- US-A- 4 357 665
- US-A1- 2006 064 205

## Description

### FIELD OF THE INVENTION

The present invention relates to the control of the supply of electrical power within a building or other powered zone. In particular, but not exclusively, the present invention is concerned with the reduction of "standby power" to electrical devices.

### BACKGROUND OF THE INVENTION

Many electrical appliances, for example domestic televisions, video recorders and computers, remain connected to mains electricity even when the appliance is not being used. Typically, such appliances (when they are not being used) are placed into a "standby mode" in which they remain connected to mains electricity and continue to draw electrical power from the mains supply. For example, a television (TV) might be turned off using a remote control but although the TV is no longer fully operational, the TV does continue to draw a (reduced) amount of power from the mains supply. Electricity may also be consumed from devices which are switched off, for instance by power supply and transformer units of such devices.

Although the amount of electrical power drawn in a standby mode is typically less than that used by the appliance when this is operational, many appliances still draw significant power when in standby mode. For example, a TV in standby mode may draw several watts, or even several tens of watts, as opposed to several hundred watts when fully operational. The situation can be similar with a device which includes an electrical transformer coupled directly to the main supply and not separately switchable.

The standby power draw represents wasted energy. This wasted energy is considered to contribute unnecessarily to global warming. The standby power also unnecessarily increases the electricity bill to a user.

WO2004054065 describes a method, computer program product, and apparatus and control system and method for providing substantially uninterrupted power to a load. The apparatus includes a control system coupled with an electrical power storage subsystem and an electric power generator. The control system is configured to provide a plurality of modes of operation including at least a static compensator (STATCOM) mode, an uninterruptible power supply (UPS) mode and a generator mode and to control transitions between each of the plurality of modes.

US2006064205 discloses a power management system and associated method that includes provision of local wireless energy control units at remote sites for controlling power delivery to customer loads, and a central station with a wireless transmitter for broadcasting commands to the wireless energy control units. The wireless energy control units each comprise a bank of switches for controlling power delivery to electrical loads at each local site. The controllable switches preferably have a deformable bimetal member controlled by a heated coil for engaging and disengaging electrical contacts. Each wireless energy control unit is capable of being pre-configured so as to specify the order or priority in which electrical loads are disengaged, in response to commands to reduce power consumption received from the central station. The central station issues power reduction commands according to different priority levels or alert stages, causing the local wireless energy units to disengage local loads accordingly.

### SUMMARY OF THE PRESENT INVENTION

The present invention is defined in the independent claims to which the reader is now directed. Preferred or advantageous embodiments are set out in the dependent claims. Embodiments seek to provide apparatus for and a method of controlling the supply of electrical power to a building or other powered zone. In the preferred embodiment, the apparatus and method provide a control unit between the mains supply and the electrical supply circuit of a room or other building, the control unit being operable to switch selectively main power to that circuit. Advantageously, the apparatus is fitted downstream of the fuse box or circuit breaker of the mains supply, thereby allowing the fuse box to perform its current supply monitoring functions unimpeded.

According to an aspect of the present invention, there is provided apparatus for controlling the supply of electrical mains power to a powered zone of a building according to claim 1.

The present invention provides apparatus able to close off the supply of electrical power to a part of building, such as one or more of the electrical circuits of a house, office or factory. By closing off the electrical circuit, any electrical devices connected to that circuit will be denied electrical supply and thus will not consume electricity. Any devices left in a standby mode, such as televisions and the like, will be completely switched off and any devices having permanently on supplies, such as those with transformers, will also be disconnected.

Advantageously, the apparatus is connectable electrically downstream of a fuse box or other circuit breaker of the mains power and to one or more electrical circuits directly connected to said fuse box or other circuit breaker.

This feature has an important practical consideration in that the apparatus does not affect the normal functioning of the mains electrical supply to the building or zone and allows the fuse box or other circuit breaker to perform its intended safety functions. The apparatus can thus function solely to select the electrical circuits to which mains power is supplied. It is also unnecessary for the apparatus to be provided with its own electricity safety components (fuses, circuit breakers etc) and can operate as a controlled switching unit.

Preferably, the control unit includes a programmable timer for timing the connection of electrical power to the electrical output.

In the preferred embodiment, the electrical input unit includes a plurality of electrical input elements able to be coupled to a plurality of electrical supply inputs and/or the electrical output unit includes a plurality of electrical output elements able to be coupled to a plurality of electrical circuits. In this embodiment, the apparatus is able to provide selective power to a plurality of different electrical circuits of a building. For instance, the apparatus may be connected to a kitchen supply circuit, to a living room electrical supply circuit and to a bedroom circuit. The control means is thus preferably operable to provide selectively programmable control of the electrical supply to the various circuits coupled to the apparatus. Thus, the kitchen circuit could be switched off at certain periods, the bedroom circuit at other periods and so on. This could be at different times of day, for different days and so on, at the option of the user.

The apparatus is provided with a return to normal supply function (a bypass device) which is operable during a malfunction of the apparatus. In the present invention, the bypass device operates to ensure that electrical power is maintained form the electrical input unit to the electrical output unit during a malfunction, thereby to ensure continued supply of electricity to the circuits of the building or other zone should the apparatus malfunction. In one embodiment, the bypass device provides a switch between the electrical input and associated electrical output which is normally closed, that is closed when powered off. The switch must be powered on to open. Thus, should there be a malfunction of the device, such as by failure of its own power, the switch or switches would trigger to a closed position ensuring continued supply of mains power. In one embodiment, the or each switch may be a relay which is closed in the powered down state. In an alternative embodiment, the switch may be a thyristor provided with a separate power source and which is powered closed when a malfunction is detected. This could be in the form of solid state devices which act as normally closed, or such as thyristors (they could be powered from a separate monitoring circuit build within the preferred embodiment, this circuit would constantly monitor all of the preferred embodiment functions, and if a malfunction were to be noted it could power on the thyristors to maintain electrical supplies.

The control unit preferably includes a programmable timer.

According to another aspect of the present invention, there is provided a method of controlling the supply of electrical mains power to a powered zone of a building according to claim 14.

Advantageously, the method connects the apparatus electrically downstream of a fuse box or other circuit breaker of the mains power and to one or more electrical circuits directly connected to said fuse box or other circuit breaker.

It is known to use mains switching devices to control the supply of electricity to, for example, "Economy 7" devices. In Great Britain, Economy 7 is an electricity tariff that offers reduced price electricity for 7 hours, from 12.30am to 7.30am. Appliances such as storage heaters and hot water heaters are connected to an Economy 7 mains circuit that is switched on, during the hours of 12.30am to 7.30am only, by a clock controlled switch. A user has no access to change the time period during which the clock controlled switch energises Economy 7 appliances.

An advantage of the described embodiments is that the allow appliances to be turned on/off at whatever time(s) suit the lifestyle of the user (as opposed to being fixed at 12.30am to 7.30am). The preferred embodiments also provide a box that provides an electrically safe way of connecting the various appliances to the mains.

Another advantage of the preferred embodiments is that it the apparatus may be installed electrically downstream of an electrical energy consumption meter (i.e. downstream of a meter that typically records the quantity of kilo-Watt hours consumed by appliances owned by a user). Typically, if a user wishes to convert to an Economy 7 tariff then the user's electricity supplier will need to install an Economy 7 meter - the installation process can cause disruption to the user as the electricity supply to the user will typically need to be interrupted in order to allow the Economy 7 meter to be safely installed. In contrast, the apparatus switches power on/off downstream of a meter and thus can be installed without needing the intervention of the user's electricity supplier.

Yet another advantage of the preferred embodiment is that it also allows appliances such as table lamps (that do not draw any appreciable standby power) to be controlled without requiring the user to separately turn all such appliances on and off. Thus the apparatus may be installed into an office to turn all appliances off, except for essential devices such as a computer server.

### DESCRIPTION OF THE DRAWINGS

Embodiments of the present invention are described below, by way of example only, with reference to the accompanying drawings, in which:
Figure 1 shows a schematic perspective view of an embodiment of the electricity supply apparatus;
Figure 2 shows a schematic diagram of the device of Figure 1; and
Figure 3 shows an example of the device of Figure 1 installed between a distribution box (fuse box or other circuit breaker) and various electrical circuits of a building.

### DESCRIPTION OF THE PREFERRED EMBODIMENTS

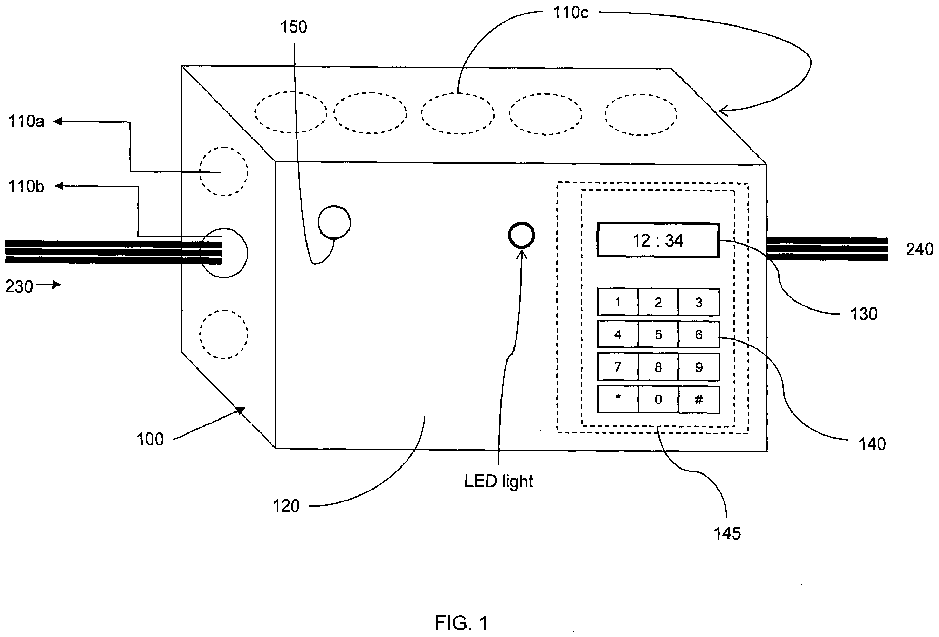

Figure 1 shows a schematic perspective view of an enclosure 100 (here shown as a casing). Around the sides of the casing 100 there are provided punch-outs 1 10a, 110b, 110c that may be knocked out by an installer to allow wiring into and out of the casing 100 and convenient locations. The casing 100 is preferably made of metal and the punch-outs 110 are regions of reduced thickness that may readily be knocked out by an installer, thus forming one or more apertures 110 in the casing 100 through which to pass wiring. Convenient formats for punch-out sections are circular holes either 20 mm or 25 mm in diameter although other sizes and/or shapes may be provided.

In other embodiments, punch-outs 110 need not be provided, although punch-outs are preferred as they can reduce installation time of the device compared to, say, drilling 20 mm or 25 mm holes in the casing 100.

Figure 1 shows a front panel 120 on which is provided a display 130 and a keypad 140. The display 130 is used by a user, in conjunction with the keypad 140, to control the time period(s) for which mains circuits will be energised by the device 100. In some embodiments, the display 130 and the keypad 140 constitute a multi-day programmable timer 145 that allows a user to control devices according to the user's weekly or other schedule.
The front panel 120 has an over-ride push button switch 150. Figure 1 shows a single override button 150 although the number of buttons 150 could be more, for instance to override control to individual electrical circuits connects to the device 100. The override switch 150 may not be provided in some instances.

It is not essential that the button 150 is a push-button switch; it could instead be a toggle switch or a momentary toggle switch. The pushbutton 150 can be pressed by a user to allow a mains circuit to be switched on (or off, depending on the application required), thus overriding the timer 145. Preferably the pushbutton 150 controls a single-shot (that is, monostable) timer. Thus button 150 may be pressed to turn on (or off) its respective circuit for, say, 5 minutes. In some embodiments, the time period of the single-shot timer is programmable by a user. In embodiments having a plurality of buttons 150, each button 150 may control a respective single-shot timer, where each timer has a respective time period.

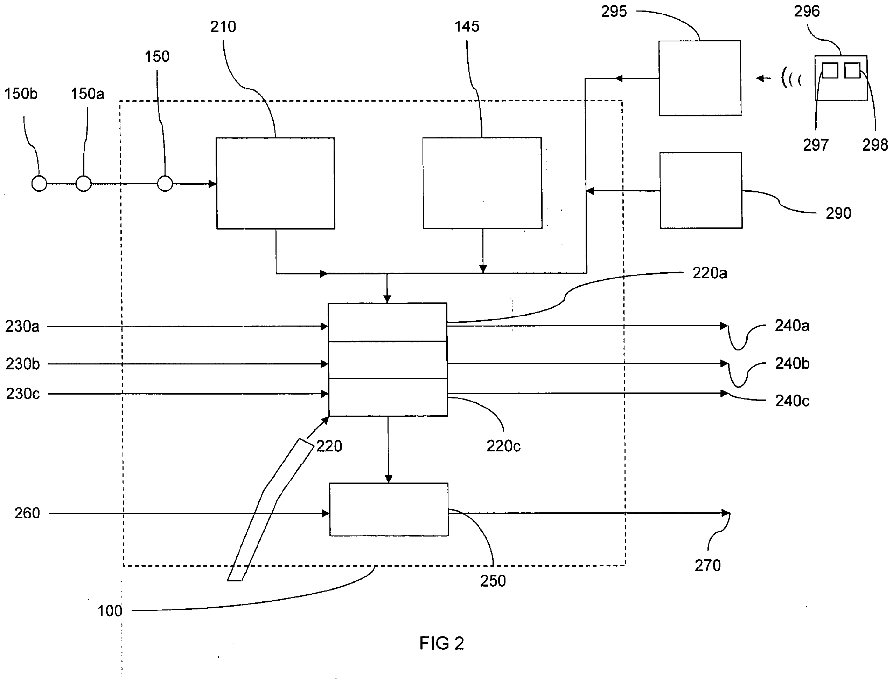

Optionally, further buttons 150a, 150b (see Figure 2) may be placed around a home/office and connected to the button 150, or directly connected to the timer 145 (for example in embodiments that do not have a button 150 on the front panel 120 of the box 100).

Figure 1 also shows the device 100 provided with an indicator light 122, in this example an LED lamp (preferably multi-coloured). The indicator light 122 provides an indication of the operating state of the device 100. In the preferred embodiment, the light 122 will shine one colour (for instance green) when the device 100 is operational and properly controlling the mains electrical supply to the coupled circuits and another colour (for instance red or not at all) when the device is malfunctioning. As explained, in the preferred embodiment the device 100 will allow power to the outputs of the device, that is to the connected circuits or devices, in the case of a malfunction (failure on), in which case the malfunctioning indication of the light 122 will indicate that supply is being fed continuously to the circuits and that the timing and other control functions are not operational.

Figure 2 shows a schematic diagram of the device of Figure 1. Switching devices 220 are used to control the mains supply to the circuits of the building or other powered zone, and possibly directly to electrical appliances. In this embodiment the switching devices 220 are relays, although in other embodiments they may be, for example, triacs.

In this embodiment, there are provided three switching devices 220a, 220b, 220c. Each device 220 receives a respective fused feed 230a, 230b, 230c from a distribution box (not shown) and outputs a respective switched output 240a, 240b, 240c.

These switching devices 240a, 220b and 220c can in practice be coupled to separate circuits of a building or other zone, so as to be switchable separately, or could be coupled to the same circuit or electrical appliance.

When the three switching devices 220a, 220b, 220c are electrically in parallel and act, in effect, as a single device, they allow increased load capacity as three separate fused circuits can be switched. For instance, in British domestic wiring, a fused mains circuit will typically be rated for 32A of current and using switching devices 220 rated for at least 32A, the three working together will provide a switched load capacity of 96A.

Although not shown in detail by Figure 2, each of the fused feeds 230a 230b, 230c, and each of the outputs 240, preferably comprises respective earth, live and neutral conductors.

In other embodiments, more or fewer (instead of three) switching devices 220 may be controlled by the timer 145. In some cases, the box 100 may be installed in tower blocks (with many residential flats) or in offices and may control tens or hundreds of mains circuits. In such installations, the switching devices 200 may be connected to different phases of a three-phase mains supply.

In the preferred embodiment, the switching devices 220 are of a type which can fail in a closed state. In this manner, should there be a malfunction of the device, the switches 220 will ensure that there will be an uninterrupted supply of electrical power to the outputs 240 and thus will ensure that in the event of failure of the device normal electrical supply to the building and electrical appliances will be maintained. The only change will be a loss of the control of the supply via the device. For this purpose, in one embodiment the switches 220 may be relays which are normally closed, that is closed when not powered. Any other normally closed switching device of this type could be used.

It is also envisaged that in some embodiments the switching devices could include thyristors provided with a separate power supply operable to supply power the thyristors in the event of a detected fault to ensure that current can still flow from the inputs 230 to the outputs 240. In effect, the separate power supply will be from the mains electricity supply and not dependent upon the operability of the other components of the apparatus.

As those skilled in the art will appreciate, a distribution box (typically a fuse box or other mains circuit breaker unit) is fitted downstream of an electricity meter and distributes the mains supply to each mains circuit. Typically, a house, business or factory will have: one or more fused lighting circuits; one or more fused socket outlet circuits, to which appliances such as a TV may be connected; and one or more fused other circuits (for instance for an electric cooker).

Figure 2 shows an optional switching device 250. Some embodiments may also be provided with one or more devices 250 so that, in conjunction with a suitable timer 145, outputs 270 may be switched from feeds 260. To allow this, the timer 145 is capable of providing two separate activation signals (one for signal for the devices 220, another signal for the device 250). Alternatively, two timers 145 may be used, one for the devices 220 and another for the device 250. Although Figure 2 shows a single optional switching device 250, some embodiments may have two or more switching devices 250.

For example, the timer 145 may be programmed to activate the outputs 240 between 7am and 9am, and again from 6pm until 10pm, on all seven days of the week. The timer 145 may be programmed to activate the output 270 only between 4pm and 8pm on Saturdays and Sundays only.

A single-shot timer 210 responds to the button 150 to turn on the devices 220 for, in this embodiment, 5 minutes. The timer 210 may be adjustable by a user, for example in the range 1 to 30 minutes. In embodiments having two or more separately controlled devices 220, 250, two or more respective push buttons 150, optionally with respective single-shot timers 210, may be provided.

Figure 2 also shows a signal 280 from an optional external device 290 such as a burglar alarm or a fire alarm. The signal 280 acts as an override signal, turning the outputs 240 (and output 270, if installed) on (or, in some embodiments, off) in the event that an intruder or a fire is detected by the external device 290.

In other embodiments, an optional receiver 295 for a radio or an infra-red remote control 296 may be used to control the devices 240, 250. For example, the remote control 296 may have one button 297 for toggling the activation of devices 220a, 220b, 220c and a separate button 298 for toggling the activation of the device 250. Alternatively, the buttons 297, 298 may be used to activate respective single-shot timers 210.

As those skilled in the art will appreciate, Figures 2 does not show details of safety earth bonding. In embodiments in which the device 100 is made of metal, provision is made for connecting the metal box to safety earth. In embodiments in which the box 100 is formed of plastic, it may not be necessary to connect the box to earth but terminals are nonetheless provided inside the device 100 to allow an installer to make a through connection (from the mains feeds 230a, 230b, 230c to the switched mains outlets 240a, 240b, 240c) of the safety earth.

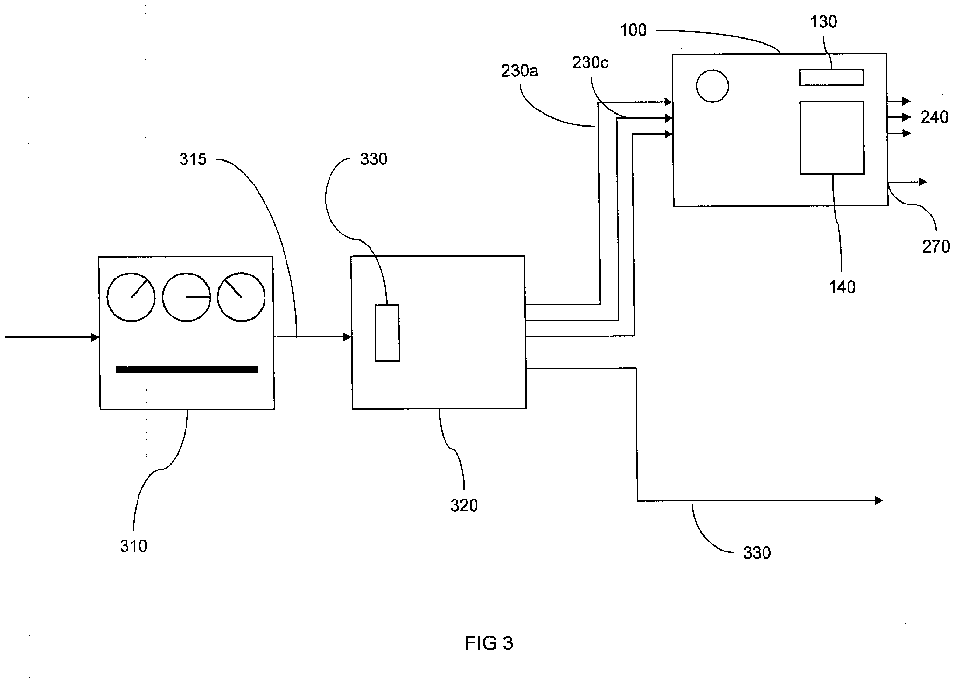

Figure 3 shows an example of the device 100 installed adjacent an electricity meter 310 and a distribution box 320. The device 100 receives fused feeds 230 from the distribution box 320 and outputs switched feeds 240, 270. Unswitched feeds 330 from the distribution box 320 are connected directly as lighting circuits, power circuits, spurs or ring mains. The distribution box 320 has a master on/off switch 330 that receives the mains electricity supply 315 from the meter 310 and that allows all mains circuits from the distribution box 320 to be switched off. The device 100 can be installed by turning the switch 330 off, thus isolating the fused feeds 230, 330 and allowing the device 100 to be safely connected to the fused feeds 230.

In some embodiments, the device 100 may be integrated with a distribution box 320 by including fuses (or circuit breakers) in the device 100. Whether or not the device 100 is integrated with a distribution box 100, the device 100 is preferably provided with electrical terminals to facilitate convenient connection of the fused feeds 230a, 230b, 230c and of the outputs 240a, 240b, 240c. As those skilled in the art will appreciate, the electrical terminals may comprise terminal blocks, for example using screws, sprung clamps or insulation displacement connectors.

It is not essential that the device 100 be used to switch mains electricity. In isolated locations, mains electricity may not be available and the device 100 may instead be used to switch electricity generated locally using a diesel-powered generator (not shown). In some situations, instead of switching AC (alternating current) mains electricity (which typically alternates at 50Hz or 60Hz), the device 100 may be used to switch direct current (DC) electricity.

Some embodiments may be provided with an override to turn off the devices 220 even when the timer 145 would otherwise turn the devices 220 on. In yet other embodiments, the timer 145 may be dispensed with and the single-shot timer 210 may be used instead of the timer 145 to control the devices 220.

In summary, there is disclosed a device for controlling the supply of mains electricity to one or more mains circuits of a building, such as a house, for use in closing off mains electrical supply to those circuits, thereby to switch off any electrical appliances coupled to those circuits. The device thus provides for avoiding wasted electricity usage of appliances left in a stand-by mode of which otherwise consume electricity even when switched off. The device allows the selective control of electricity to different zones or mains circuits. In the preferred embodiment, the device provides a bypass mode which ensures continued supply of electrical power to the building in the event of malfunction of the device.

Practical embodiments of the device could incorporate one or more of the following features:

### Switching

1. Be able to typically switch up to 20 individual rated 40A resistive loads - or be modular so banks of switches can be additional add-ons
2. Be able to switch circuits on any mix of 3 phases from a typical distribution board
3. Circuit input terminals capable of taking a minimum 6mm sq. cable
4. Circuit output terminals capable of taking a 6mm sq. or 2 x 2.5mm sq cables
5. Circuits to default/fail normally closed if the Unit fails. This is so circuits allow current to pass through, acting as if the device is not installed. i.e. the control circuit fuse blows which just removes the ability to switch power 'OFF'.

### Electrical control of switching

1. A Programmable "year" timer/calendar with minimum of 1 "on" and 1 "off' time each day to control switching of desired circuits (ideally 2 per day)
2. A single shot "stay on" (for a programmable length of time) timer to control/override switching of desired circuits
3. Auxiliary terminals that act as "Complete over-ride functions" of the timers. 2 terminals are normally linked out (o/c to operate) and 2 of which are normally open (s/c to operate) these terminals can be configured to either open or close the main circuits as required (depending upon application) and allow external control of the device - this could be controlled by various means such as a relay controlled by a BMS system, pc, fire alarm, burglar alarm, thermostat, etc.
4. An external voltage input rated 50 to 230Vac to over-ride the timers and switch on desired circuits or as required for international compliance.
5. An external voltage input rated 5 to 30Vdc to over-ride the timers and switch on desired circuits.
6. LAN/Ethernet/USB other common methods of communication/unknown future common methods of communication for PC/PLC/controller connections to enable easy control of the switching via a PC or over internet for example.
7. A wireless "remote type device" (similar to a wireless doorbell) to activate the single shot "stay on for a programmable length" timer or switch all "off' till next programmed turn-on time. The remote is to indicate all circuits are either on or off.
8. A "wired in" button on the enclosure front to activate the single shot "stay on for a programmable length" timer with terminals to parallel up more buttons, or to switch off till next "on" time.
9. A button/switch device to manual over-ride and switch everything off as the customer leaves the property (a device on/off) switch. i.e. they go away for the weekend.
10. The Standby Saving unit must have as minimal as possible current draw (go into a sleep mode when possible) as this value must be deducted from any savings to the customer.

### Enclosure

1. Typically to be wall mountable
2. To house all circuitry an enable easy wiring to and from the PCB
3. To house the keyboard and display on the front
4. To comply with industrial standards (have a CE/BS marking and suitable IP rating)

### Human interaction

1. A keyboard and display to program the switching times without the need for a PC

## Claims

1. An apparatus (100) for controlling the supply of electrical mains power to a powered zone of a building, the apparatus including:
an electrical input (230) connectable to a mains supply of electrical power;
an electrical output (240) connectable to an electrical circuit of a powered zone of a building;
a switching device (220) coupled between the electrical input (230) and the electrical output (240) and operable to control the electrical coupling between the electrical input (230) and output (240), wherein in one mode the switching device (220) is operable to connect the electrical input (230) to the electrical output (240) and thereby to allow mains supply of electrical power to the powered zone and to any electrical devices coupled to said electrical circuit and in another mode the switching device (220) is operable to disconnect the electrical input (230) from the electrical output (240), thereby to prevent the supply of any electrical power to the electrical circuit and any devices connected thereto;
**characterised in that** the switching device (220) acts as a bypass device and operates to ensure that electrical power is maintained from the electrical input (230) to the electrical output (240) during a malfunction of the apparatus, thereby to ensure continued supply of electricity to the circuits of the building.

2. An apparatus (100) according to claim 1, wherein the switching device (220) is provided with a separate power supply operable to supply the switching device (220) in the event of a detected fault to ensure that current can still flow from the electrical input unit (230) to the electrical output unit (240).

3. An apparatus (100) according to claim 2, further comprising a monitoring circuit configured to monitor the functions of the apparatus and if a malfunction is detected to power the switching device to maintain electrical supplies.

4. An apparatus (100) according to any preceding claim, wherein the apparatus (100) is connectable electrically downstream of a fuse box or other circuit breaker of the mains power and to one or more electrical circuits.

5. An apparatus (100) according to any preceding claim, wherein the electrical input (230) includes a plurality of electrical input elements (230c-a) able to be coupled to a plurality of electrical supply inputs and/or the electrical output (240) includes a plurality of electrical output elements (240a-c) able to be coupled to a plurality of electrical circuits.

6. An apparatus (100) according to claim 5, wherein the switching device (220) is operable to provide selectively programmable control of the electrical supply to the various circuits coupled to the apparatus.

7. An apparatus (100) according to any of claims 1, 2 or 3, wherein the bypass device includes a thyristor which is powered closed when a malfunction of the apparatus is detected.

8. An apparatus (100) according to any preceding claim, wherein the switching device (220) comprises a control unit which includes a programmable timer for timing the connection of electrical power to the electrical output (240); optionally including over-ride circuitry for over-riding the programmable timer of the apparatus, and optionally wherein the over-ride circuitry is operable to turn on the switching device (220) in response to an external signal.

9. An apparatus (100) according to any preceding claim, including a single-shot timer, and optionally including a switch for activating the single-shot timer.

10. An apparatus (100) according to any preceding claim, including remote control circuitry operable to receive a control signal from a remote control device.

11. An apparatus (100) according to any preceding claim, including an indicator light (122) configured to provide an indication of the operating state of the apparatus, such that when the apparatus (100) is malfunctioning the indicator light will indicate that supply is being fed continuously to the circuit of a powered zone of a building.

12. An apparatus (100) according to any preceding claim configured to be installed electrically downstream of an electrical energy consumption meter.

13. A distribution box comprising an apparatus (100) according to any preceding claim.

14. A method of controlling the supply of electrical mains power to a powered zone of a building, the method including the steps of:
providing apparatus (100) including an electrical input (230), an electrical output (240) and a switching device (220) coupled between the electrical input (230) and the electrical output (240);
connecting the electrical input (230) to a mains supply of electrical power;
connecting the electrical output (240) to an electrical circuit of a powered zone of the building;
wherein in one mode the switching device (220) is operable to connect the electrical input (230) to the electrical output (240) and thereby to allow mains supply of electrical power to the powered zone and to any electrical devices coupled to said electrical circuit and in another mode the switching device (220) is operable to disconnect the electrical input (230) from the electrical output (240), thereby to prevent the supply of any electrical power to the electrical circuit and any devices connected thereto;
**characterised in that** the switching device (220) acts as a bypass device, operable to ensure that electrical power is maintained from the electrical input (230) to the electrical output (240) during a malfunction of the apparatus, thereby to ensure continued supply of electricity to the circuits of the building.

15. A method according to claim 14, including the step of connecting the apparatus (100) electrically downstream of a fuse box or other circuit breaker of the mains power and to one or more electrical circuits.

## Patentansprüche

1. Einrichtung (100) zum Steuern der Versorgung einer energieversorgten Zone eines Gebäudes mit elektrischem Netzstrom, wobei die Einrichtung Folgendes aufweist:
einen elektrischen Eingang (230), der mit einer elektrischen Netzstromversorgung verbindbar ist;
einen elektrischen Ausgang (240), der mit einer elektrischen Schaltung einer energieversorgten Zone eines Gebäudes verbindbar ist;
eine Schaltvorrichtung (220), die zwischen den elektrischen Eingang (230) und den elektrischen Ausgang (140) gekoppelt ist und zum Steuern der elektrischen Kopplung zwischen dem elektrischen Eingang (230) und Ausgang (240) funktionell ist, wobei die Schaltvorrichtung (220) in einem Modus zum Verbinden des elektrischen Eingangs (230) mit dem elektrischen Ausgang (240) und dadurch zum Ermöglichen einer elektrischen Netzstromversorgung der energieversorgten Zone und jedweder elektrischen Vorrichtungen, die mit der genannten elektrischen Schaltung gekoppelt sind, funktionell ist und die Schaltvorrichtung (220) in einem anderen Modus zum Trennen des elektrischen Eingangs (230) von dem elektrischen Ausgang (240), um dadurch die Versorgung der elektrischen Schaltung und jedweder damit verbundener Vorrichtungen mit elektrischer Energie zu verhindern, funktionell ist;
**dadurch gekennzeichnet, dass** die Schaltvorrichtung (220) als eine Umgehungsvorrichtung wirkt und funktioniert, um sicherzustellen, dass elektrische Energie von dem elektrischen Eingang (230) zu dem elektrischen Ausgang (240) während einer Fehlfunktion der Einrichtung aufrechterhalten wird, um dadurch die fortgesetzte Elektrizitätsversorgung der Schaltungen des Gebäudes sicherzustellen.

2. Einrichtung (100) nach Anspruch 1, wobei die Schaltvorrichtung (220) mit einer separaten Energieversorgung versehen ist, die funktionell ist zum Versorgen der Schaltvorrichtung (220) im Fall einer erfassten Störung, um sicherzustellen, dass Strom noch von der elektrischen Eingangseinheit (230) zu der elektrischen Ausgangseinheit (240) fließen kann.

3. Einrichtung (100) nach Anspruch 2, die ferner eine überwachte Schaltung beinhaltet, die zum Überwachen der Funktionen der Einrichtung und zum Aufrechterhalten elektrischer Versorgungen, wenn eine Fehlfunktion erfasst wird, zur Energieversorgung der Schaltvorrichtung konfiguriert ist.

4. Einrichtung (100) nach einem der vorhergehenden Ansprüche, wobei die Einrichtung (100) einem Sicherungskasten oder anderen Schutzschalter des Netzstroms elektrisch nachgeschaltet und mit ein oder mehr elektrischen Schaltungen verbindbar ist.

5. Einrichtung (100) nach einem der vorhergehenden Ansprüche, wobei der elektrische Eingang (230) mehrere elektrische Eingangselemente (230c-a) aufweist, die mit mehreren elektrischen Versorgungseingängen gekoppelt werden können, und/oder der elektrische Ausgang (240) mehrere elektrische Ausgangselemente (240a-c) aufweist, die mit mehreren elektrischen Schaltungen gekoppelt werden können.

6. Einrichtung (100) nach einem Anspruch 5, wobei die Schaltvorrichtung (220) zum Bereitstellen selektiv programmierbarer Steuerung der elektrischen Versorgung der verschiedenen mit der Einrichtung gekoppelten Schaltungen funktionell ist.

7. Einrichtung (100) nach einem der Ansprüche 1, 2 oder 3, wobei die Umgehungsvorrichtung einen Thyristor aufweist, der abgeschaltet wird, wenn eine Fehlfunktion der Einrichtung erfasst wird.

8. Einrichtung (100) nach einem der vorhergehenden Ansprüche, wobei die Schaltvorrichtung (220) eine Steuereinheit beinhaltet, die einen programmierbaren Zeitgeber zur zeitlichen Steuerung der Verbindung elektrischer Energie mit dem elektrischen Ausgang (240) beinhaltet; wahlweise eine Überbrückungsschaltungsanordnung zum Überbrücken des programmierbaren Zeitgebers der Einrichtung aufweist, und wobei wahlweise die Überbrückungsschaltungsanordnung zum Einschalten der Schaltvorrichtung (220) als Antwort auf ein externes Signal funktionell ist.

9. Einrichtung (100) nach einem der vorhergehenden Ansprüche, die einen monostabilen Zeitgeber aufweist und wahlweise einen Schalter zur Aktivierung des monostabilen Zeitgebers aufweist.

10. Einrichtung (100) nach einem der vorhergehenden Ansprüche, die eine Fernsteuerschaltungsanordnung aufweist, die zum Empfangen eines Steuersignals von einer Fernsteuervorrichtung funktionell ist.

11. Einrichtung (100) nach einem der vorhergehenden Ansprüche, die eine Anzeigeleuchte (122) aufweist, die zum Bereitstellen einer Anzeige des Betriebszustands der Einrichtung konfiguriert ist, so dass, wenn die Einrichtung (100) nicht richtig funktioniert, die Anzeigeleuchte anzeigt, dass die Schaltung einer energieversorgten Zone eines Gebäudes ununterbrochen versorgt wird.

12. Einrichtung (100) nach einem der vorhergehenden Ansprüche, die konfiguriert ist, um einem Zähler des Verbrauchs elektrischer Energie elektrisch nachgeschaltet installiert zu werden.

13. Verteilerkasten, der eine Einrichtung (100) nach einem der vorhergehenden Ansprüche beinhaltet.

14. Verfahren zum Steuern der Versorgung einer energieversorgten Zone eines Gebäudes mit elektrischem Netzstrom, wobei das Verfahren die folgenden Schritte aufweist:
Bereitstellen einer Einrichtung (100), die einen elektrischen Eingang (230), einen elektrischen Ausgang (240) und eine Schaltvorrichtung (220), die zwischen den elektrischen Eingang (230) und den elektrischen Ausgang (240) gekoppelt ist, aufweist;
Verbinden des elektrischen Eingangs (230) mit einer elektrischen Netzstromversorgung;
Verbinden des elektrischen Ausgangs (240) mit einer elektrischen Schaltung einer energieversorgten Zone des Gebäudes;
wobei die Schaltvorrichtung (220) in einem Modus zum Verbinden des elektrischen Eingangs (230) mit dem elektrischen Ausgang (240) und dadurch zum Ermöglichen einer elektrischen Netzstromversorgung der energieversorgten Zone und jedweder elektrischen Vorrichtungen, die mit der genannten elektrischen Schaltung gekoppelt sind, funktionell ist und die Schaltvorrichtung (220) in einem anderen Modus zum Trennen des elektrischen Eingangs (230) von dem elektrischen Ausgang (240), um dadurch die Versorgung der elektrischen Schaltung und jedweder damit verbundener Vorrichtungen mit elektrischer Energie zu verhindern, funktionell ist;
**dadurch gekennzeichnet, dass** die Schaltvorrichtung (220) als eine Umgehungsvorrichtung wirkt, wobei sie funktionell ist, um sicherzustellen, dass elektrische Energie von dem elektrischen Eingang (230) zu dem elektrischen Ausgang (240) während einer Fehlfunktion der Einrichtung aufrechterhalten wird, um dadurch die fortgesetzte Elektrizitätsversorgung der Schaltungen des Gebäudes sicherzustellen.

15. Verfahren nach Anspruch 14, das den Schritt des Verbindens der Einrichtung (100) einem Sicherungskasten oder anderen Schutzschalter des Netzstroms elektrisch nachgeschaltet und mit ein oder mehr elektrischen Schaltungen beinhaltet.

## Revendications

1. Appareil (100) de commande de l'alimentation en puissance électrique secteur à une zone alimentée en électricité d'un bâtiment, l'appareil comprenant :
un entrée électrique (230) pouvant être connectée à une alimentation secteur en puissance électrique ;
une sortie électrique (240) pouvant être connectée à un circuit électrique d'une zone alimentée en électricité d'un bâtiment ;
un dispositif de commutation (220) couplé entre l'entrée électrique (230) et la sortie électrique (240) et opérationnel pour commander le couplage électrique entre l'entrée électrique (230) et la sortie (240), dans lequel dans un mode le dispositif de commutation (220) est opérationnel pour connecter l'entrée électrique (230) à la sortie électrique (240) et permettre ainsi l'alimentation secteur en puissance électrique à la zone alimentée en électricité et à n'importe quels dispositifs électriques couplés audit circuit électrique et dans un autre mode le dispositif de commutation (220) est opérationnel pour déconnecter l'entrée électrique (230) de la sortie électrique (240), empêchant ainsi l'alimentation en puissance électrique quelconque au circuit électrique et à n'importe quels dispositifs connectés à celui-ci ;
**caractérisé en ce que** le dispositif de commutation (220) agit comme un dispositif de dérivation et fonctionne pour garantir que la puissance électrique est maintenue de l'entrée électrique (230) à la sortie électrique (240) pendant un mauvais fonctionnement de l'appareil, garantissant ainsi une alimentation continue en électricité aux circuits du bâtiment.

2. Appareil (100) selon la revendication 1, dans lequel le dispositif de commutation (220) est pourvu d'une alimentation en puissance séparée opérationnelle pour alimenter le dispositif de commutation (220) dans le cas d'un dérangement détecté afin de garantir que du courant peut toujours circuler de l'unité d'entrée électrique (230) à l'unité de sortie électrique (240).

3. Appareil (100) selon la revendication 2, comprenant en outre un circuit de surveillance configuré pour surveiller les fonctions de l'appareil et si un mauvais fonctionnement est détecté, pour alimenter le dispositif de commutation afin de maintenir les alimentations en électricité.

4. Appareil (100) selon l'une quelconque des revendications précédentes, où l'appareil (100) peut être connecté électriquement en aval d'une boîte à fusibles ou autre disjoncteur de la puissance secteur et à un ou plusieurs circuits électriques.

5. Appareil (100) selon l'une quelconque des revendications précédentes, dans lequel l'entrée électrique (230) comprend une pluralité d'éléments d'entrée électrique (230c-a) capables d'être couplés à une pluralité d'entrées d'alimentation électrique et/ou la sortie électrique (240) comprend une pluralité d'éléments de sortie électrique (240a-c) capables d'être couplés à une pluralité de circuits électriques.

6. Appareil (100) selon la revendication 5, dans lequel le dispositif de commutation (220) est opérationnel pour fournir une commande sélectivement programmable de l'alimentation électrique aux divers circuits couplés à l'appareil.

7. Appareil (100) selon l'une quelconque des revendications 1, 2 ou 3, dans lequel le dispositif de dérivation comprend un thyristor qui est actionné fermé lorsqu'un mauvais fonctionnement de l'appareil est détecté.

8. Appareil (100) selon l'une quelconque des revendications précédentes, dans lequel le dispositif de commutation (220) comprend une unité de commande qui comprend une minuterie programmable pour minuter la connexion de puissance électrique à la sortie électrique (240) ; comprenant optionnellement des circuits prioritaires pour prendre la priorité sur la minuterie programmable de l'appareil, et optionnellement dans lequel les circuits prioritaires sont opérationnels pour mettre en circuit le dispositif de commutation (220) en réponse à un signal externe.

9. Appareil (100) selon l'une quelconque des revendications précédentes, comprenant une minuterie à un coup , et comprenant optionnellement un commutateur pour activer la minuterie à un coup.

10. Appareil (100) selon l'une quelconque des revendications précédentes, comprenant des circuits de télécommande opérationnels pour recevoir un signal de commande d'un dispositif de télécommande.

11. Appareil (100) selon l'une quelconque des revendications précédentes, comprenant un indicateur lumineux (122) configuré pour fournir une indication de l'état de fonctionnement de l'appareil, de telle sorte que lorsque l'appareil (100) fonctionne mal l'indicateur lumineux indiquera qu'une alimentation est fournie continuellement au circuit d'une zone alimentée en électricité d'un bâtiment.

12. Appareil (100) selon l'une quelconque des revendications précédentes, configuré pour être installé électriquement en aval d'un compteur de consommation en énergie électrique.

13. Boîte de distribution comprenant un appareil (100) selon l'une quelconque des revendications précédentes.

14. Procédé de commande de l'alimentation en puissance électrique secteur à une zone alimentée en électricité d'un bâtiment, le procédé comprenant les étapes consistant à :
fournir un appareil (100) comprenant une entrée électrique (230), une sortie électrique (240) et un dispositif de commutation (220) couplé entre l'entrée électrique (230) et la sortie électrique (240) ;
connecter l'entrée électrique (230) à une alimentation secteur en puissance électrique ;
connecter la sortie électrique (240) à un circuit électrique d'une zone alimentée en électricité d'un bâtiment ;
dans lequel dans un mode le dispositif de commutation (220) est opérationnel pour connecter l'entrée électrique (230) à la sortie électrique (240) et permettre ainsi une alimentation secteur en puissance électrique à la zone alimentée en électricité et à n'importe quels dispositifs électriques couplés audit circuit électrique et dans un autre mode le dispositif de commutation (220) est opérationnel pour déconnecter l'entrée électrique (230) de la sortie électrique (240), empêchant ainsi l'alimentation en puissance électrique quelconque au circuit électrique et à n'importe quels dispositifs connectés à celui-ci ;
**caractérisé en ce que** le dispositif de commutation (220) agit comme un dispositif de dérivation, opérationnel pour garantir que la puissance électrique est maintenue de l'entrée électrique (230) à la sortie électrique (240) durant un mauvais fonctionnement de l'appareil, garantissant ainsi une alimentation continue en électricité aux circuits du bâtiment.

15. Procédé selon la revendication 14, comprenant l'étape consistant à connecter l'appareil (100) électriquement en aval d'une boîte à fusibles ou autre disjoncteur de la puissance secteur et à un ou plusieurs circuits électriques.
